# EUROPEAN PATENT APPLICATION

(11) **EP 4 539 450 A1**
(43) Date of publication of application: **16.04.2025**
(21) Application number: 22945477.2
(22) Date of filing: 08.08.2022
(51) Int. Cl.: H04N 5/765

(54) **IMAGE TRANSMISSION DEVICE**

(30) Priority: 10.06.2022 CN 202221463656 U
(71) Applicant: Shenzhen Hollyland Technology Co., Ltd., Shenzhen, Guangdong 518108 (CN)
(72) Inventor: LIU, Dezhi, Shenzhen, Guangdong 518108 (CN); PENG, Wenbin, Shenzhen, Guangdong 518108 (CN)
(74) Representative: Grünecker Patent- und Rechtsanwälte PartG mbB
(86) International application number: PCT/CN2022/110923
(87) International publication number: WO 2023/236343

(57) **Abstract**

Provided in the embodiments of the present disclosure is a video transmission device. In the video transmission device, a video transceiving unit has two functions of receiving a video and sending a video, and a wireless communication unit can implement transceiving of video data in a wireless manner, such that the video transmission device can be multipurpose, i.e., the video transmission device can be used as both a wireless video-transmission transmitting device and a wireless video-transmission receiving device, so as to adapt to different scenarios. In addition, the video transmission device can further be integrated with a display unit, allowing the video transmission device to function as a monitor regardless of whether same is used as the transmitting device or the receiving device, thereby facilitating a user in watching, anytime and anywhere, a video that is sent or received by the video transmission device, which is highly flexible and convenient.

## Description

### TECHNICAL FIELD

The present disclosure relates to the field of communication technologies, and in particular to a video transmission device.

### BACKGROUND

A wireless video transmission device is usually used in video shooting, short video shooting, live broadcast and other fields. For example, in the process of video shooting, a camera is usually connected with a wireless video-transmission transmitting device, and a video collected by the camera is sent to a wireless video-transmission receiving device, which can be connected with a director's monitor or a monitor at a video production end, and then the received video is displayed through the monitor.

At present, wireless video transmission products and wireless video-transmission transmitting devices can only be used for video transmission scenarios, and wireless video-transmission receiving devices can only be used for video reception scenarios. For the two usage scenarios of video transmission and video reception, users need to purchase the wireless video-transmission transmitting device and wireless video-transmission receiving device respectively, which is not flexible enough and costly.

### SUMMARY

Based on this, embodiments of the present disclosure provide a video transmission device.

According to a first aspect of an embodiment of the present disclosure, a video transmission device is provided, which includes a wireless communication unit and a video transceiving unit connected with each other:
when the video transmission device is in a sending mode, the wireless communication unit is configured to wirelessly connect with a first external device, and send a to-be-sent video signal to the first external device, and when the video transmission device is in a receiving mode, wirelessly connect with a second external device, receive a first video source signal from the second external device, and send the first video source signal to the video transceiving unit; and
the video transceiving unit is configured to: when receiving a switching instruction to switch the video transmission device into the receiving mode, enable a decoding mode on itself to decode the first video source signal into a to-be-displayed video signal and output the to-be-displayed video signal, and when receiving a switching instruction to switch the video transmission device into the sending mode, enable an encoding mode on itself to encode a second video source signal into the to-be-sent video signal, and send the to-be-sent video signal to the wireless communication unit.

By applying the solution of the embodiments of the present disclosure, the video transceiving unit of the video transmission device is equipped with two functions of encoding and decoding video, and the wireless communication unit can realize the sending and receiving of video data by wireless means, and function switching of the video transceiving unit and the wireless communication unit can be realized by means of software configuration, so that the video transmission device can be used both as a wireless video-transmission transmitting device and as a wireless video-transmission receiving device, making it versatile and suitable for different scenarios, thus saving costs. Additionally, the video transmission device's operation mode can be switched through software configuration, making it more flexible.

It should be understood that the above general description and the following detailed descriptions are exemplary and explanatory only and do not limit the present disclosure.

### BRIEF DESCRIPTION OF DRAWINGS

The accompanying drawings, which are incorporated in and constitute a part of the specification, illustrate embodiments consistent with the present disclosure, and are used together with the specification to explain the principles of the present disclosure.
FIG. 1 is a schematic diagram of a video shooting scene of an embodiment of the present disclosure.
FIG. 2(a) is a schematic structural diagram of a video transmission device according to an embodiment of the present disclosure.
FIG. 2(b) is a schematic structural diagram of a video transmission device according to an embodiment of the present disclosure.
FIG. 2(c) is a schematic diagram of video loop-out realized by a video transmission device according to an embodiment of the present disclosure.
FIG. 3(a) is a schematic data flow diagram of a video transmission device in a receiving mode according to an embodiment of the present disclosure.
FIG. 3(b) is a schematic structural diagram of a video transmission device in a sending mode according to an embodiment of the present disclosure.
FIG. 4 is a schematic structural diagram of a video transmission device according to an embodiment of the present disclosure.
FIG. 5 is a schematic diagram of a video transmission device outputting a first video source signal or a second video source signal to a wired video receiving device according to an embodiment of the present disclosure.
FIGS. 6(a) and 6(b) are schematic data flow diagrams of a video transmission device in a sending mode and a receiving mode, respectively, according to an embodiment of the present disclosure.
FIG. 7 is a schematic structural diagram of a video transmission device according to an embodiment of the present disclosure.
FIGS. 8(a) and 8(b) are schematic data flow diagrams of a video transmission device in a sending mode and a receiving mode, respectively, according to an embodiment of the present disclosure.

### DETAILED DESCRIPTION

Reference will now be made in detail to exemplary embodiments, examples of which are illustrated in the accompanying drawings. When the following description refers to the accompanying drawings, unless otherwise indicated, the same numbers in different accompanying drawings indicate the same or similar elements. Implementations described in the following exemplary embodiments do not represent all implementations consistent with the present disclosure. Rather, they are merely examples of apparatuses and methods consistent with some aspects of the present disclosure as detailed in the appended claims.

Terms used in the present disclosure are only for a purpose of describing specific embodiments, and are not limiting the present disclosure. Singular forms of "a," said," and "the" used in the present disclosure and in the appended claims are also intended to include majority forms, unless the context clearly indicates otherwise. It should also be understood that the term "and/or" as used herein refers to any or all of the possible combinations containing one or more of the listed items in association.

It should be understood that although terms first, second, third, etc. may be used to describe various information in the present disclosure, this information should not be limited to these terms. These terms are used only to distinguish the same type of information from one another. For example, without departing from the scope of the present disclosure, first information can also be called second information, and similarly, the second information can also be called the first information. Depending on the context, the word "if" as used herein can be interpreted as "at" or "when" or "in response to determining".

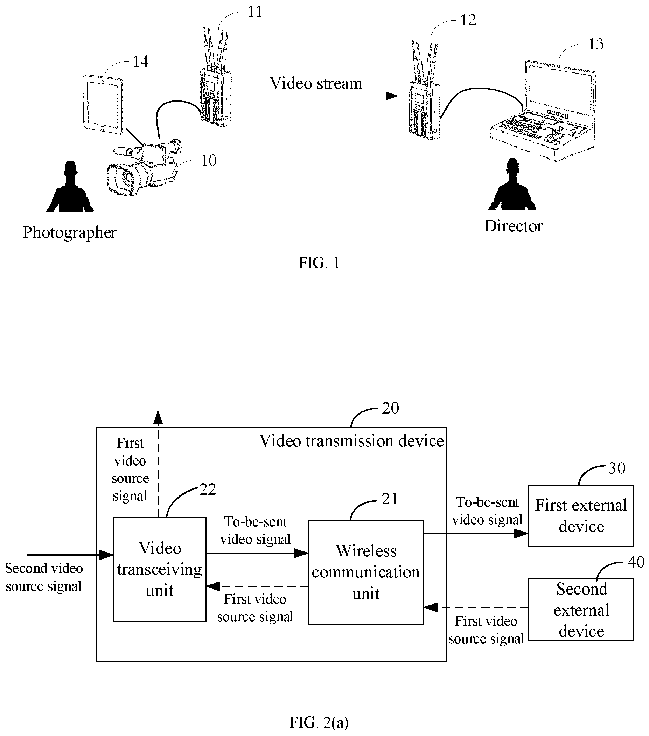

A wireless video transmission device and various monitors are usually used in video shooting, short video shooting, live broadcast and other fields. As shown in FIG. 1, it is a schematic diagram of a video shooting scene. A camera 10 can be connected with a wireless video-transmission transmitting device 11, and a video stream collected by the camera 10 can be sent to a wireless video-transmission receiving device 12, which is generally mounted high in a director's work area and can be connected with a director's monitor or a monitor 13 at a video production end, and then the received video can be displayed through the monitor 13. At the same time, since a photographer also needs to be on-site to view the video captured by the camera 10 in real time, a monitor 14 is usually also connected to the camera 10 for the photographer to view the captured video in real time. It can be seen that in a general shooting scene, a wireless video-transmission transmitting device and a monitor are usually needed at a video sending end, and a wireless video-transmission receiving device and a monitor are needed at a video receiving end.

At present, the wireless video-transmission transmitting device and wireless video-transmission receiving device are two independent devices, i.e., the wireless video-transmission receiving device can only be used as a video sending end and its function is only designed according to the requirements of the video sending end, while the wireless video-transmission receiving device can only be used as a video receiving end and its function is only designed according to the requirements of the video receiving end, which is not flexible enough. If the wireless video transmission device needs to be used in two application scenarios: the video sending end and the video receiving end, users need to buy two sets of devices separately, and the cost is high.

Based on this, an embodiment of the present disclosure provides a video transmission device, which has the functions of a video sending end and a video receiving end at the same time. Users can flexibly configure an operation mode of the video transmission device, i.e., a sending mode and a receiving mode, according to requirements, so that the video transmission device can be used as a wireless video-transmission transmitting device or a wireless video-transmission receiving device to meet the use requirements of different application scenarios.

As shown in FIG. 2(a), a schematic structural diagram of a video transmission device according to an embodiment of the present disclosure is shown. A video transmission device 20 includes a wireless communication unit 21 and a video transceiving unit 22 connected in sequence. The video transmission device 20 includes two operation modes: a sending mode and a receiving mode. In the sending mode, the video transmission device can be used as a wireless video-transmission transmitting device, i.e., a video can be sent to a video receiving end by wireless transmission. In the receiving mode, the video transmission device can be used as a wireless video-transmission receiving device, i.e., a video can be received from a video sending end through wireless transmission.

In some embodiments, the video transmission device 20 includes a human-computer interaction component, through which a user-triggered switching instruction for switching the operation mode of the video transmission device 20 can be acquired, so as to switch the operation mode of the video transmission device 20 between the sending mode and the receiving mode. The human-computer interaction component can be a physical button set in the video transmission device 20 or a functional control set in a display screen of the video transmission device 20, and the user can switch the above two operation modes by triggering the physical button or functional control. In some scenes, in order to facilitate the user's operation, the video transmission device 20 can also integrate a voice control function, and the user can switch the above two operation modes through voice control. In an actual product, a switching manner of the operation mode can be set based on an actual demand, which is not limited by the implementations of the present disclosure.

In this embodiment, the video transmission device 20 can be configured into the sending mode or receiving mode through software configuration, so that the switching of the operation mode of the video transmission device 20 is more flexible. For example, when the video transmission device 20 is in the receiving mode, various functional components of the video transmission device 20 can be configured into required functional modes in the receiving mode through software programs, such as switching the video transceiving unit 22 to a decoding mode, gating a video transmission path in the receiving mode, and the like. Similarly, when the video transmission device 20 is in the sending mode, it can operate in both of the above operating modes.

Solid arrows in FIG. 2(a) illustrate a schematic diagram of a data processing flow when the video transmission device 20 is in the sending mode. When the video transceiving unit 22 receives a user-triggered switching instruction to switch the video transmission device 20 into the sending mode, it can configure its own operation mode into an encoding mode.

After the video transceiving unit 22 is configured in the encoding mode, it can encode a second video source signal into a to-be-sent video signal, and output it to the wireless communication unit 21. When the video transceiving unit 22 is configured in the encoding mode, some other processing required by the video transmission device 20 in the sending mode can also be performed on the second video source signal, which is not limited to the encoding processing, and the specific processing mode can be set based on actual requirements.

When the video transmission device 20 is in the sending mode, the wireless communication unit 21 can wirelessly connect with a first external device 30 as a video receiving end, and then send the to-be-sent video signal to the first external device 30 by wireless transmission.

The second video source signal may be a video signal received by the video transmission device 20 from an external device in a wired or wireless manner, for example, a signal received from a camera, or the second video source signal may also be a video signal stored locally by the video transmission device 20, which is not limited by the embodiment of the present disclosure.

Dash arrows in FIG. 2(a) illustrate a schematic diagram of a data processing flow when the video transmission device 20 is in the receiving mode. When the video transceiving unit 22 receives a user-triggered switching instruction to switch the video transmission device 20 into the receiving mode, it can configure its own operation mode into a decoding mode. At this time, the wireless communication unit 21 can wirelessly connect with a second external device 40 as a video sending end, receive a first video source signal from the second external device 40 and output it to the video transceiving unit 22. At this time, the video transceiving unit 22 may have a decoding function, decode the received first video source signal into a to-be-displayed video signal and output it. When the video transceiving unit 22 is in the decoding mode, in addition to decoding the first video source signal, it can also perform some other processing based on the actual needs, such as format conversion and image quality processing.

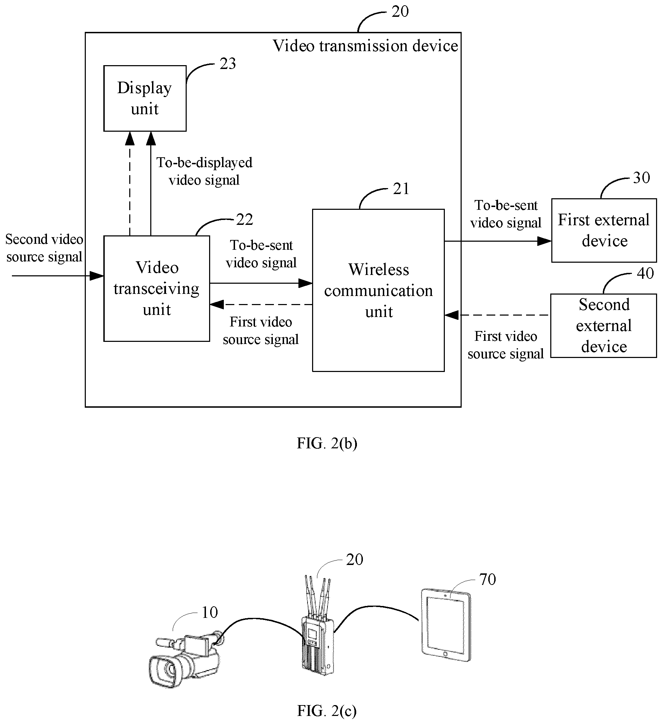

In addition, in the current shooting scene, the wireless video-transmission transmitting device, a monitor at the video sending end, the wireless video-transmission receiving device, and a monitor at the video receiving end are mostly four independent devices with independent functions. It will be cumbersome to set up a set of the above video transmission system at the shooting scene, and during the shooting process, the director usually needs to walk around the shooting scene and schedule his work. At present, a device at the video receiving end can't meet the director's need to flexibly monitor the video. Therefore, it is necessary to enable the video transmission device not only be used as a video sending end and a video receiving end, but also have a function of a monitor, so as to meet the requirements of the video sending end or the video receiving end for video monitoring. In some embodiments, as shown in FIG. 2(b), the video transmission device 20 further includes a display unit 23. Solid arrows in FIG. 2(b) illustrate a data processing flowchart of the video transmission device 20 in the sending mode. Since the video sending end usually has a requirement of displaying the to-be-sent video signal to a user for viewing, e.g., in a process of video shooting, a photographer also needs to view the video captured by the camera in real time, therefore, in the sending mode, the video transceiving unit 22 is further configured to process the second video source signal into a to-be-displayed video signal for the display unit 23 to display. For example, the video transceiving unit 22 can perform format conversion, image quality processing and other related processing on the second video source signal, and then output it to the display unit 23 for display. The specific processing method can be set based on actual needs.

Dash arrows in FIG. 2(b) illustrate a schematic diagram of a data processing flow when the video transmission device 20 is in the receiving mode. In the receiving mode, the video transceiving unit 22 can decode the received first video source signal into a to-be-displayed video signal and output it to the display unit 23. The video receiving end also typically needs to display the received video signal to the user in order for the user to view the received video. Taking the shooting scene as an example, a director usually needs to walk around the scene and schedule the work based on the collected videos. By integrating the display unit 23 in the video transmission device 20, the user can carry the video transmission device 20 around, receive and view videos in real time, thus realizing the requirement of flexible video monitoring.

Whether the video transmission device 20 has the function of displaying video in the sending mode and the receiving mode can be set based on actual requirements. For example, in some scenarios, there may be a function to display the video only in the receiving mode, in some scenarios, there may be a function to display the video only in the sending mode, and in some scenarios, there may be a function to display the video in both the sending mode and the receiving mode.

The wireless communication unit 21 and the first external device 30 or the wireless communication unit 21 and the second external device 40 can be connected through various wireless communication modes, such as wifi, Bluetooth or some self-defined wireless communication protocols, which is not limited by the embodiment of the present disclosure. The wireless communication unit 21 may be a functional module with wireless transceiving function, or an independent chip, for example, the wireless communication unit 21 may be a wifi module.

The video transceiving unit 22 may be a functional module with video encoding and decoding functions, video transmission functions, video analysis and processing functions, or it may be an independent chip, or it may be obtained by a combination of a plurality of chips, e.g., the video transceiving unit 22 may be an SOC chip that integrates the above functions, or it can be a combination of multiple chips, each chip undertaking some of the above functions.

The display unit 23 may be a display with a display function, for example, it may be a liquid crystal display (LCD), a light emitting diode (LED) display, and the like.

The video transceiving unit 22 of the video transmission device 20 according to the embodiment of the present disclosure is equipped with both functions of receiving and sending video, and the wireless communication unit 21 can realize the transceiving of video data by wireless means, so that the video transmission device can be multi-purpose, which can be used as a wireless video-transmission transmitting device as well as a wireless video-transmission receiving device, and is applicable to different scenarios. In addition, the video transmission device 20 is further integrated with the display unit 23, which can have the function of a monitor regardless of whether the video transmission device 20 is used as a transmitting device or a receiving device, and is convenient for the user to monitor the video sent or received by the video transmission device 20 at any time and place, which is very flexible and convenient.

In some embodiments, the wireless communication unit 21 may be a wifi communication unit. Generally, the wifi communication unit includes two modes, an access point (AP) mode and a Station mode. Therefore, the video transceiving unit 22 further configures a mode of the wireless communication unit 21. For example, when the video transmission device 20 is in the sending mode, the video transceiving unit 22 can configure the wireless communication unit 21 in the AP mode or the Station mode according to the actual demand of the product. Similarly, when the video transmission device 20 is in the receiving mode, the wireless communication unit 21 can also be configured in the AP mode or the Station mode as required.

In some embodiments, when the video transmission device 20 is in the sending mode, i.e., when it is used as a wireless video-transmission transmitting device, the video receiving end may be a device such as a mobile phone that is fixed in the Station mode, i.e., the video transmission device 20 needs to be used as an access point of a wireless network, so the video transceiving unit 22 can switch the wireless communication unit 21 into the AP mode. When the video transmission device 20 is in the receiving mode, the video transceiving unit 22 can switch the wireless communication unit 21 into the Station mode.

In some embodiments, the video transceiving unit 22 is further configured to connect with a wired video source, and the second video source signal includes a wired video source signal received from the wired video source. For example, the video transceiving unit 22 may include a video input interface, such as a high definition multimedia interface (HDMI) interface, a serial digital interface (SDI), a display port (DP), etc., through which it is connected with a wired video source (such as a video camera), and then receives a second video source signal from the wired video source and sends it to the video receiving end.

After the video transmission device 20 displays the to-be-sent video or the received video to the user through the display, in order to facilitate the user to adjust some parameters of the display, an on-screen display (OSD) menu can further be displayed on a screen to facilitate the user to adjust various parameters (e.g., colors, modes, etc.) of the display. Therefore, the video transceiving unit 22 is further configured to generate an OSD signal, and a to-be-displayed video signal includes a signal obtained by superimposing the first video source signal or the second video source signal with the generated OSD signal. For example, after receiving the first video source signal from the second external device 40 through the wireless communication unit 21, the video transceiving unit 22 can generate a corresponding OSD signal, and then superimpose the OSD signal and the first video source signal to obtain a to-be-displayed video signal, and then send it to the display unit 23 for display. Similarly, after the video transceiving unit 22 obtains the second video source signal, it can also generate a corresponding OSD signal, and then superimpose it on the second video source signal to obtain a to-be-displayed video signal, and then send it to the display unit 23 for display.

In some embodiments, when the video transmission device 20 is in the receiving mode, after receiving the first video source signal from the second external device 40, the video transmission device 20 can further output it to other devices. Taking a video shooting scene as an example, when the video transmission device 20 is used as a wireless video-transmission receiving device, after receiving the video captured by the video camera, it may need to be displayed to the director through the display and sent to a video production end for later video production. Therefore, the video transceiving unit 22 may further include a video output interface, such as an HDMI interface, an SDI interface, a DP interface, etc., and then connect with a wired video receiving device (such as a device at the video production end) through the video output interface, and send the received first video source signal to the wired video receiving device.

In some scenarios, after receiving the video, the video transmission device 20 can also send it to other video receiving ends by wireless transmission, such as mobile phones, so as to send the received video to different users and facilitate multiple people to watch the received video at the same time.

Similarly, when the video transmission device 20 is in the sending mode, after acquiring the second video source signal, the video transmission device 20 can also send it to a wired video receiving end through the video output interface to realize a function of video loop-out. As an example, as shown in FIG. 2(c), in a video shooting scene, after the video transmission device 20 acquires the video captured by the camera, in addition to needing to send the video to the first external device 30 via wireless transmission, it may further need to be outputted to other devices located on a photographer's side, and thus the video transceiving unit 22 may output the acquired video to a wired video receiving device 70 via the video output interface.

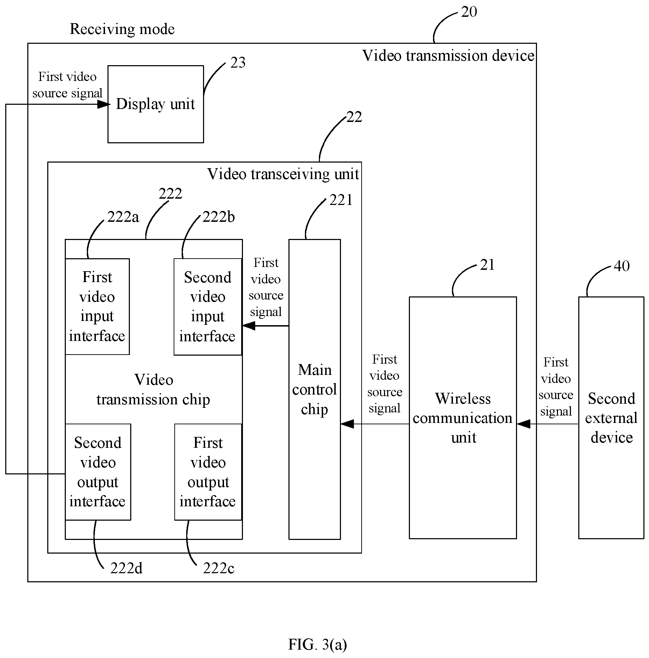

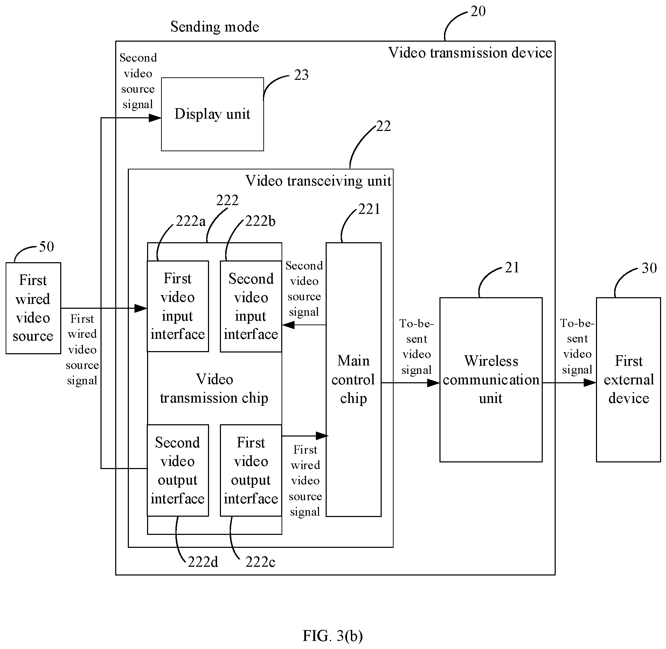

In some embodiments, as shown in FIG. 3(a) or FIG. 3(b), the video transceiving unit 22 includes a main control chip 221 and a video transmission chip 222 which are connected with each other. The video transmission chip 222 may include two video input interfaces, namely a first video input interface 222a and a second video input interface 222b, and two video output interfaces, namely a first video output interface 222c and a second video output interface 222d. The first video input interface 222a is configured to connect with an external video source, so as to receive a video signal from the external video source. For example, the video transmission chip 222 may be connected with a first wired video source (such as a camera) through the first video input interface 222a, and receive a first wired video source signal from the first wired video source. The second video input interface 222b is configured to connect with the main control chip 221, so as to receive a video from the main control chip 221. The first video output interface 222c is configured to connect with the main control chip 221, so as to output the video to the main control chip 221. The second video output interface 222d is configured to connect with the display unit 23, so as to output the to-be-displayed video signal to the display unit 23.

As shown in FIG. 3(a), it is a schematic diagram of a data flow when the video transmission device 20 is in the receiving mode. After the main control chip 221 receives a switching instruction to switch the video transmission device 20 into the receiving mode, the main control chip 221 can configure its own operation mode into the decoding mode and configure the wireless communication unit 21 into the Station mode. After the main control chip 221 completes the mode configuration, a gating status of the input/output interfaces in the video transmission chip 222 will change accordingly with the mode change. The main control chip 221 can receive the first video source signal from the second external device 40 through the wireless communication unit 21, decode the first video source signal, and then send the first video source signal to the video transmission chip 222 through the second video input interface 222b. The video transmission chip 222 is configured to output the first video source signal through the second video output interface 222d, so as to display the first video source signal through the display unit 23. The video transmission chip 222 can directly output the first video source signal to the display unit 23, or the video transmission chip 222 can first output the first video source signal to other functional units, after the first video source signal is processed by other functional units, the first video source signal is processed into a to-be-displayed video signal that can be displayed by the display unit 23, and then the to-be-displayed video signal is sent to the display unit 23.

As shown in FIG. 3(b), it is a schematic diagram of a data flow when the video transmission device 20 is in the sending mode. After the main control chip 221 receives a switching instruction to switch the video transmission device 20 into the sending mode, the main control chip 221 can configure itself into the coding mode and configure the wireless communication unit 21 into the AP mode. After the main control chip 221 completes the mode configuration, a gating status of the input/output interfaces in the video transmission chip 222 will change accordingly with the mode change. The video transmission chip 222 can receive a first wired video source signal from a first wired video source 50 (such as a camera) through the first video input interface 222a, and then output the first wired video source signal to the main control chip 221 through the first video output interface 222c. The main control chip 221 can perform relevant processing on the first wired video source signal based on actual use requirements to obtain the second video source signal, encode the second video source signal into a to-be-sent video signal, and send the to-be-sent video signal to the first external device 30 through the first wireless communication unit 21. Meanwhile, the main control chip 221 can output the second video source signal to the video transmission chip 222 through the second video input interface 222b, and the video transmission chip 222 outputs the second video source signal through the second video output interface 222d for display by the display unit 23. The video transmission chip 222 can directly output the second video source signal to the display unit 23, or the video transmission chip 222 can first output the second video source signal to other functional units, after the second video source signal is processed by other functional units, the first video source signal is processed into a to-be-displayed signal that can be displayed by the display unit 23, and then the to-be-displayed signal is sent to the display unit 23.

When the video to be sent or received through the video transmission device 20 is displayed on a display screen, users usually hope to perform some processing on the displayed video through the display screen, such as zooming the video image, moving a picture, etc. In order to realize these auxiliary functions of the video transmission device 20, in some embodiments, the to-be-displayed video can be preprocessed by the main control chip 221 before being displayed. Therefore, the first video source signal or the second video source signal can be the signal preprocessed by the main control chip 221, and the to-be-displayed video signal is preprocessed by the main control chip 221, so that any one of the following functions can be realized on the display unit 23: mask marking, picture zooming, local scaling, picture moving, picture freezing, vertical left-right flipping, and 3×3 grid, etc.

When the video transmission device 20 is in the sending mode, before the to-be-sent video is displayed by the display unit 23, the video can be preprocessed by the main control chip 221 before being displayed, so as to realize the auxiliary function of the display. Therefore, after acquiring the first wired video source signal from the first wired video source 50, the video transmission chip 222 can first send the first wired video source signal to the main control chip 221. After the main control chip 221 preprocesses the first wired video source signal to acquire the second video source signal, the second video source signal is transmitted to the video transmission chip 222 through the second video input interface 222b, and then the video transmission chip 222 outputs the second video source signal through the second video output interface 222d for display by the display unit 23.

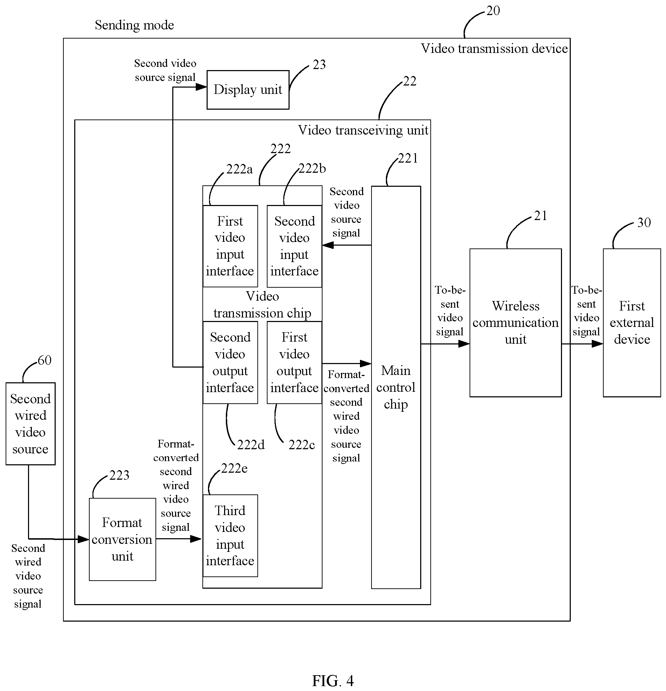

In some embodiments, as shown in FIG. 4, in order to realize that the video transmission device 20 can support different types of video interfaces, the video transmission chip 222 further includes a third video input interface 222e, and the video transceiving unit 22 further includes a video format conversion unit 23, which is configured to receive a second wired video source signal from a second wired video source 60, convert the second wired video source signal into a format supported by the third video input interface 222e, and then send the format-converted second wired video source signal to the video transmission chip 222 through the third video input interface 222e. The video transmission chip 222 can send the format-converted second wired video source signal to the main control chip 221 through the first video output interface 222c, so that the main control chip 221 can generate a second video source signal based on the format-converted second wired video source signal, and then send the second video source signal through the wireless communication unit 21 and display the second video source signal through the display unit 23.

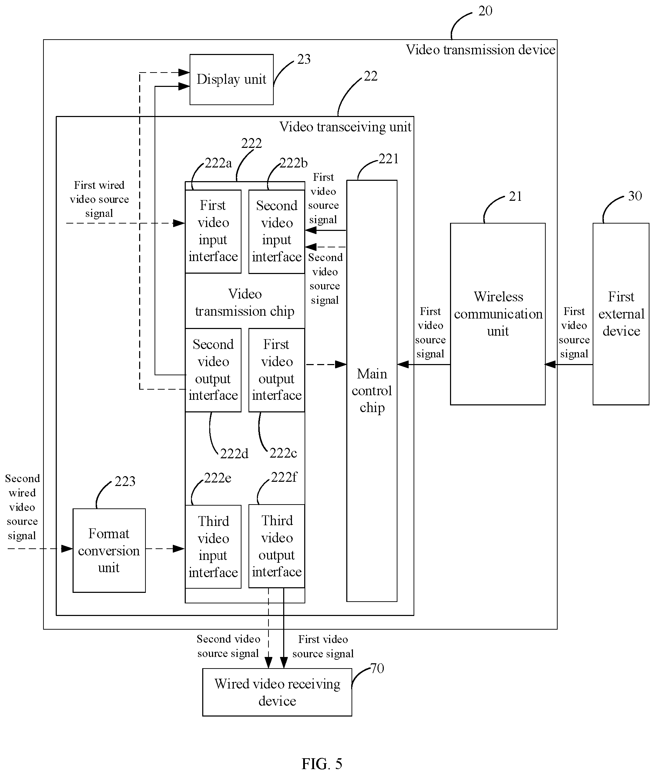

In some embodiments, the video transmission device 20 further needs to send the to-be-sent video or send the received video to other devices, so as to display or process the video on other devices. For example, taking the video transmission device 20 in the receiving mode as an example, after receiving a video sent by the sending end, the video transmission device 20 not only displays the video through the display unit 23, but also needs to send the video to other devices to display the received video in other devices. Therefore, as shown in FIG. 5, the video transmission chip 222 further includes a third video output interface 222f for outputting the first video source signal (a data flow direction indicated by solid arrows in the figure) or the second video source signal (a data flow direction indicated by dashed arrows in the figure) to the wired video receiving device 70.

In some embodiments, the first video input interface 222a, the second video input interface 222b and the third video input interface 222e may be HDMIs, and the first video output interface 222c, the second video output interface 222d and the third video output interface 222f may also be HDMIs. Since there are multiple input/output interfaces in the video transmission chip 222, and when the video transmission device 20 is in different operation modes, different input/output interfaces need to be in operating state, i.e., different input/output interfaces are gated. In order to manage the operating states of these multiple input/output interfaces, the video transmission chip 222 may be equipped with a gating matrix for configuring a video output interface corresponding to each video input interface. When the operation mode of the main control chip 221 is switched, the gating status of each input/output interface in the video transmission chip 222 can automatically change based on the switching of the operation mode of the main control chip 221. For example, after the main control chip 221 receives the switching instruction to switch the video transmission device 20 into the receiving mode, the main control chip 221 can configure itself to the decoding mode. At this time, it can automatically gate the second video input interface 222b, the second video output interface 222d and the third video output interface 222f corresponding to the input interface, which realizes the functions of receiving video by the video transmission device 20, displaying the received video to the user through the display unit 23, and outputting the received video to other devices. Similarly, when the main control chip 221 receives the switching instruction to switch the video transmission device 20 into the sending mode, the main control chip 221 can configure itself to the encoding mode, and at this time, it can automatically gate the first video input interface 222a or the third video input interface 222e, the first video output interface 222c, the second video input interface 222b and the third video output interface 222f corresponding to the above two input interfaces. It realizes the functions of sending video by the video transmission device 20, displaying the to-be-sent video to the user through the display unit 23, and outputting the to-be-sent video to other devices. In some scenarios, the video transmission chip 221 may be an HDMI matrix chip.

In some embodiments, the first video input interface 222a, the second video input interface 222b and the third video input interface 222e may be HDMIs, and the first video output interface 222c, the second video output interface 222d and the third video output interface 222f may also be HDMIs. The first wired video source 50 is an HDMI wired video source, the second wired video source 60 is an SDI wired video source, and the format conversion unit is 223 configured to convert the second wired video source signal into a signal in HDMI format.

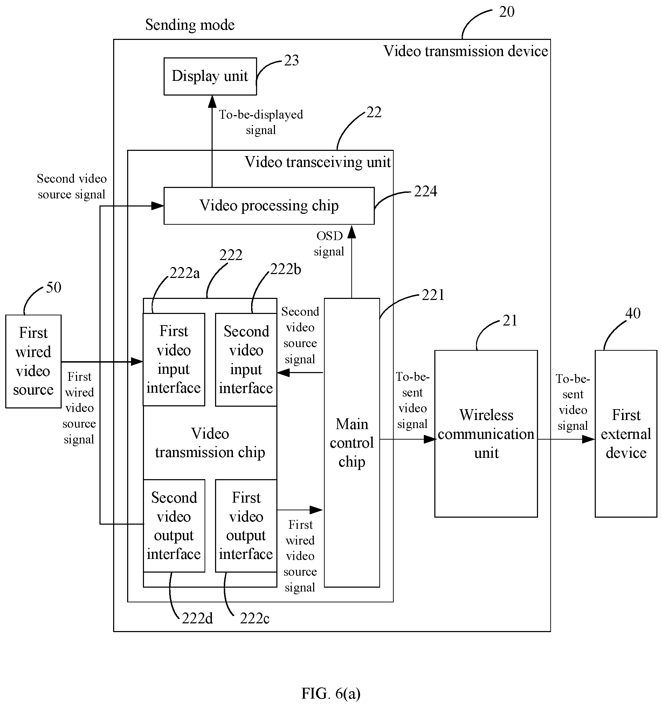

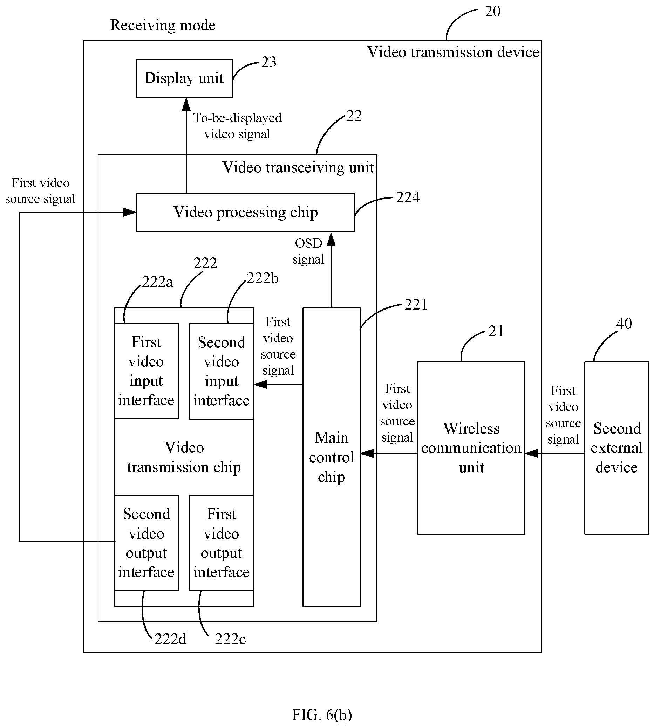

In some embodiments, when the video to be sent or received by the video transmission device 20 is displayed by the display unit 23, the video can be processed into a video that can be displayed by the display unit 23 through a special video processing chip. For example, a video format that the display unit 23 can display is usually mobile industry processor interface (MIPI) format. Therefore, the video can be converted into the video format supported by the display unit 23 through the video processing chip, and some other video analysis and processing work can be done. FIGS. 6 (a) and 6 (b) respectively show a schematic diagram of a data processing flow when the video transmission device 20 is in the sending mode or the receiving mode. As can be seen from the figures, the video transceiving unit 22 may further include a video processing chip 224. In order to enable users to adjust parameters of the display unit 23, the main control chip 221 can further be configured to generate an OSD signal. The video processing chip 224 can be connected with the main control chip 221 for receiving the OSD signal from the main control chip 221. Meanwhile, the video processing chip 224 can be connected with the video transmission chip 222 and the display unit 23 respectively, receive the first video source signal or the second video source signal from the video transmission chip 222, and then superimpose the first video source signal or the second video source signal with the OSD signal to generate a to-be-displayed video signal and send the to-be-displayed video signal to the display unit 23.

In some embodiments, the main control chip 221 may include at least one video input interface for connecting with the first video output interface 222c of the video transmission chip 222 or an output interface of the wireless communication unit 21. The main control chip 221 may further include at least one video output interface for connecting with the second video input interface 222b of the video transmission chip 222 or an input interface of the wireless communication unit 21. The main control chip 221 may further include at least one OSD signal interface for connecting with an input interface of the video processing chip 224 and outputting the generated OSD signal to the video processing chip 224. After transmitting the first video source signal or the second video source signal to the video processing chip 224, the video processing chip 224 needs to analyze and process the video source signal. If the main control chip 221 superimposes the video source signal and the OSD signal before sending it to the video processing chip 224, the video processing chip 224 needs to separate the first video source signal or the second video source signal from the superimposed signal before analyzing the video source signal, which is very complicated. In an embodiment of the present disclosure, by selecting the main control chip 221 with at least one video output interface and at least one independent OSD interface, the first video source signal and the OSD signal or the second video source signal and the OSD signal can be sent to the video processing chip 224 in two ways, so that it is convenient for the video processing chip 224 to analyze and process the first video source signal or the second video source signal, and then perform subsequent superposition processing.

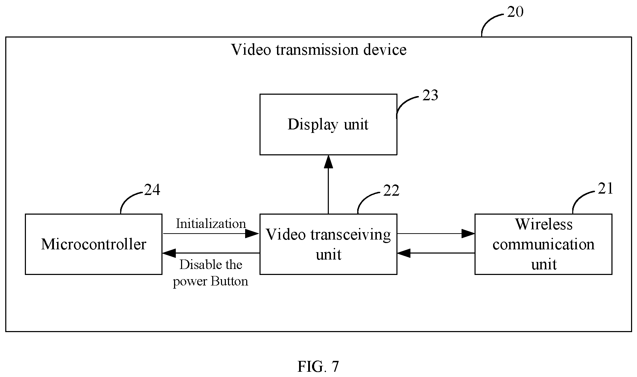

Since the video transceiving unit 22 needs to realize a variety of functions such as coding and decoding of the video, video processing, and so on, it has more processing tasks. Therefore, it is possible to add a microcontroller as a co-processor in the video transmission device, through which the microcontroller performs some time-sensitive tasks or the management of peripheral devices, such as a function of a power button, an initialization configuration of the video transceiving unit 22, and so on. Therefore, in some embodiments, as shown in FIG. 7, the video transmission device 20 may further include a microcontroller 24, through which the video transceiving unit 22 is initialized.

In some embodiments, the microcontroller 24 can also realize a power button function of the video transmission device. Usually the power button can be set to a standby function, for example, a long press on the power button can turn on the video transmission device 20, and a short press on the power button means that the video transmission device 20 can be put into a standby state, and after it enters the standby state, the video transceiving unit 22 stops working and enters a sleep state. In order to avoid that the user mistakenly touches the power button during the process of switching the operation mode of the video transmission device 20, causing the video transmission device 20 to enter the standby state, i.e., the video transceiving unit 22 stops working, which leads to a failure of switching the operation mode. Therefore, after receiving the user's instruction to switch the operation mode, the video transceiving unit 22 may first control the function of the power button of the microcontroller to be in a disable state, so that during a process of switching the operation mode, even if the user mistakenly touches the power button, the switching of the operation mode will not be affected. The function of the power button can be resumed when the switching of the operation mode is completed.

In order to further explain the video transmission device provided by the embodiments of the present disclosure, the following explanation will be combined with a specific embodiment.

Existing wireless video transmission device usually needs to be purchased in sets, the wireless video-transmission transmitting device can only be used to send a video, the wireless video-transmission receiving device can only be used to receive a video, which is not flexible enough, and no matter whether the video sending scenario or the video receiving scenario, there exists a need to monitor the video, and the current wireless video transmission device is not able to satisfy the needs of various application scenarios.

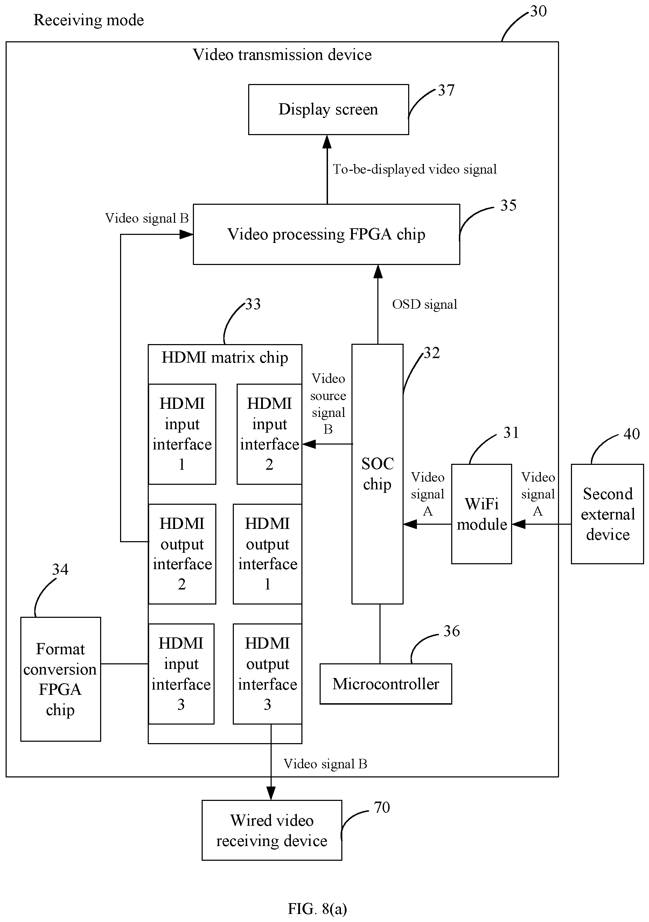

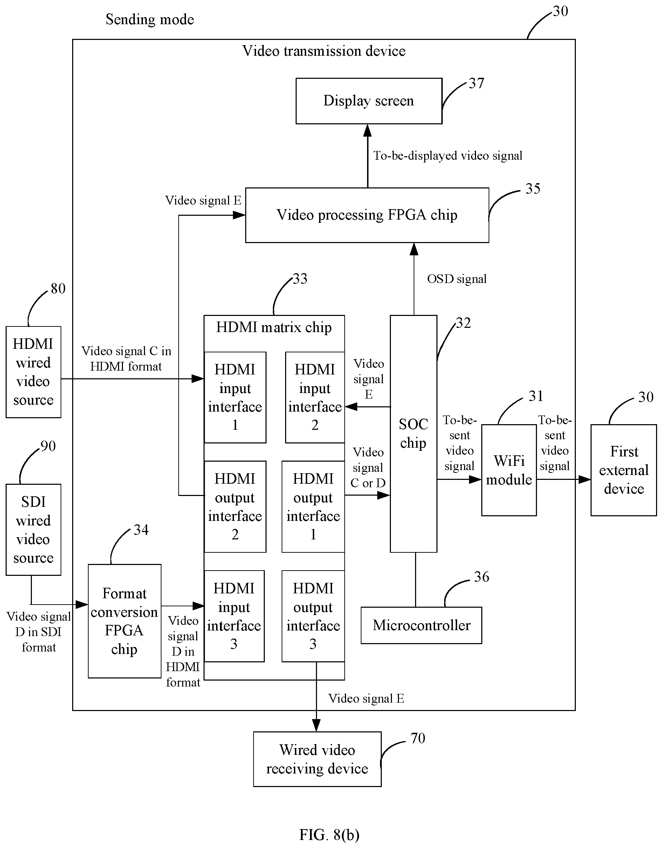

Based on this, the embodiments of the present disclosure provide a video transmission device, which can be used as both a wireless video-transmission transmitting device and a wireless video-transmission receiving device, so as to realize multi-purpose of one machine and also have the function of a monitor to meet the requirements of monitoring videos in different application scenarios. As shown in FIGS. 8(a) and 8(b), schematic structural diagrams of a video transmission device 30 according to an embodiment of the present disclosure is shown. The video transmission device 30 includes a wifi module 31, and the wifi module 31 has a video transceiving function, and is configured to receive a video from an external device or send a video to an external device. The video transmission device 30 further includes an SOC chip 32 connected to the wifi module 31. The SOC chip 32 has a video codec function and can be configured to preprocess the video and generate an OSD signal. The video transmission device 30 further includes an HDMI matrix chip 33 connected to the SOC chip 32, which includes three HDMI input interfaces (HDMI input interface 1, HDMI input interface 2, and HDMI input interface 3) and three HDMI output interfaces (HDMI output interface 1, HDMI output interface 2, and HDMI output interface 3), and further includes a gating matrix for managing an operating state of the HDMI input and output interfaces, and configuring an HDMI output interface corresponding to each HDMI input interface when the video transmission device 30 is in different operation modes. The video transmission device 30 further includes a format conversion FPGA chip 34 connected to the HDMI matrix chip 33 for converting the received video in SDI format to a video in HDMI format, which is then input to the HDMI matrix chip 33. The video transmission device 30 further includes a video processing FPGA chip 35 connected to the SOC chip 32 and the HDMI matrix chip 33, respectively. The video processing FPGA chip 35 is configured to receive an OSD signal from the SOC chip 33 and a to-be-sent video signal or a received video signal from the HDMI matrix chip 33, and the two signals are superimposed and then output to a display screen 37 for display. The video transmission device 30 further includes a microcontroller 36 connected to the SOC chip 32, which is configured to enable a power button function of the video transmission device and initialize the SOC chip 32, the HDMI matrix chip 33, the video processing FPGA chip 35, etc.

The user can control the on-off of the video transmission device through the microcontroller 36, and at the same time, the user can switch the operation mode through a human-computer interaction component on the video transmission device 30, so as to switch the video transmission device 30 into the sending mode or the receiving mode.

FIG. 8(a) is a schematic diagram of data flow when the video transmission device 30 is in the receiving mode. When the SOC chip receives the switching instruction to switch the video transmission device 30 into the receiving mode, the SOC chip 32 can configure itself to a decoding mode, configure the wifi module 31 to a Station mode, receive a video signal A from a second external device 40 through the wifi module 31, and then preprocess the video signal A to obtain a video signal B. The purpose of preprocessing is to enable the display screen 37 to realize the functions of mask marking, picture zooming, local scaling, picture moving, picture freezing, vertical left-right flipping, and 3×3 grid and so on. Then the SOC chip 32 can transmit the video signal B to the HDMI matrix chip 33 through the HDMI input interface 2 in the video transmission chip 33, and the HDMI matrix chip 33 outputs the video signal B to the video processing FPGA chip 35 through the HDMI output interface 2. At the same time, the SOC chip 32 can generate an OSD signal and then output the OSD signal to the video processing FPGA chip 35. After receiving the video signal B and the OSD signal, the video processing FPGA chip 35 can superpose them, convert them into a to-be-displayed video signal in MIPI format, and then output the to-be-displayed video signal to the display screen 37 for display. Meanwhile, the HDMI matrix chip 33 can further output the video signal B to another wired video receiving device 70 through the HDMI interface 3, so that the wired video receiving device 70 can display or process the received video.

FIG. 8(b) is a schematic diagram of data flow when the video transmission device 30 is in the sending mode. When the SOC chip 32 receives that the video transmission device 30 is in the sending mode, the SOC chip 32 can configure itself in an encoding mode and the wifi module 31 in an AP mode. In some scenarios, the HDMI matrix chip 33 can receive a video signal C in HDMI format from an HDMI wired video source 80 through the HDMI input interface 1, and then transmit the video signal C to the SOC chip 32 through the HDMI output interface 1. The SOC chip 32 can preprocess the video signal C to obtain a video signal E. The preprocessing purpose is the same as above. In some scenarios, the HDMI matrix chip can receive a video signal D in SDI format from an SDI wired video source 90 through the format conversion FPGA chip 34, convert it into a video signal D in HDMI format through the format conversion FPGA chip 34, transmit it to the HDMI matrix chip through the HDMI input interface 3, the HDMI matrix chip can transmit it to the SOC chip 32 through the HDMI output interface 1, and the SOC chip 32 can preprocess the video signal D to obtain a video signal E.

After the SOC chip 32 preprocesses the video signal C or the video signal D to obtain the video signal E, the obtained video signal E can be transmitted to the HDMI matrix chip through the HDMI input interface 2 and transmitted to the video processing FPGA chip 35 through the HDMI output interface 2. At the same time, the SOC chip 32 can generate an OSD signal and then output the OSD signal to the video processing FPGA chip 35. After receiving the video signal E and the OSD signal, the video processing FPGA chip 35 can superpose them, convert them into a to-be-displayed video signal in MIPI format, and then output the to-be-displayed video signal to the display screen 37 for display.

In addition, the SOC chip 32 can further encode the video signal E to obtain a to-be-sent video signal, and then send the to-be-sent video signal to a first external device 30 through the wifi module 31. Meanwhile, the HDMI matrix chip can further output the video signal C or D to another wired video receiving device 70 through the HDMI interface 3, so that the wired video receiving device 70 can display or process the received video.

In order to realize that the video transmission device can switch between two operation modes, and at the same time, an OSD menu can be displayed on a display screen of the video transmission device, and the display screen can provide auxiliary functions, so that users can zoom and move the displayed picture to meet the needs of users of the video transmission device in different application scenarios. Combined with the functional requirements of the video transmission device, the applicant has carried out a large amount of analysis and selection work on the characteristics and functions of the existing chips on the market, and solved the various problems encountered in the process of functional design of the video transmission by screening and combining the existing chips. For example, a special video transmission chip (HDMI matrix chip) is selected to transmit video to realize multi-channel input and output, and then a programmable SOC chip is selected to realize the video receiving and sending function through software configuration, so that the video transmission device can switch between two different operation modes. At the same time, the SOC chip can preprocess the video and generate an OSD signal. Moreover, it is considered that certain analysis and processing are required before the video is displayed. In the present disclosure, when selecting a SOC chip, the SOC chip with at least one video output interface and OSD signal output interface is selected, and the preprocessed video and OSD signal are output to the video processing FPGA chip in two ways, so that the video processing FPGA chip can analyze and process the preprocessed chip first, then superimpose it with the OSD signal, and then output it to the display screen for display. Therefore, it can avoid the problem that the FPGA chip directly outputs a video signal of a superimposed OSD signal, so that the FPGA chip needs to separate the video signal first and then analyze it when analyzing the superimposed signal, and the processing effect is poor. In the above manner, a video transmission device that can meet the needs of different application scenarios can be prepared. Various technical features in the above embodiments can be combined arbitrarily, as long as there is no conflict or contradiction between the combination of features, but limited to space, not described one by one, so the combination of various technical features in the above embodiments arbitrarily also belongs to the scope of the present disclosure.

Other implementations of the embodiments of the present disclosure will easily occur to those skilled in the art after considering the specification and practicing the present disclosure disclosed herein. The embodiments of the present disclosure are intended to cover any variations, uses or adaptations of the embodiments of the present disclosure, and these variations, uses or adaptations follow general principles of the embodiments of the present disclosure and include common sense or common technical means in the technical field that are not disclosed in the embodiments of the present disclosure. The specification and embodiments are to be regarded as exemplary only, and true scope and spirit of the embodiments of the present disclosure are indicated by the following claims.

It should be understood that the embodiments of the present disclosure are not limited to precise structures described above and shown in the accompanying drawings, and various modifications and changes can be made without departing from its scope. The scope of the embodiments of the present disclosure is limited only by the appended claims.

The above is only preferred embodiments of the embodiments of the present disclosure, and it is not used to limit the embodiments of the present disclosure. Any modification, equivalent substitution, improvement made within the spirit and principle of the embodiments of the present disclosure should be included in the protection scope of the embodiments of the present disclosure.

## Claims

1. A video transmission device, comprising a wireless communication unit and a video transceiving unit connected with each other;
the wireless communication unit is configured to:
when the video transmission device is in a sending mode, wirelessly connect with a first external device, and send a to-be-sent video signal to the first external device, and
when the video transmission device is in a receiving mode, wirelessly connect with a second external device, receive a first video source signal from the second external device, and send the first video source signal to the video transceiving unit; and
the video transceiving unit is configured to:
when receiving a switching instruction to switch the video transmission device into the receiving mode, enable a decoding mode on itself to decode the first video source signal into a to-be-displayed video signal and output the to-be-displayed video signal, and
when receiving a switching instruction to switch the video transmission device into the sending mode, enable an encoding mode on itself to encode a second video source signal into the to-be-sent video signal and send the to-be-sent video signal to the wireless communication unit.

2. The video transmission device according to claim 1, wherein the video transmission device further comprises a display unit connected to the video transceiving unit,
the video transceiving unit is further configured to perform at least one of:
processing the first video source signal into the to-be-displayed video signal and outputting the to-be-displayed video signal to the display unit, or,
processing the second video source signal into the to-be-displayed video signal and outputting the to-be-displayed video signal to the display unit; and
the display unit is configured to display the to-be-displayed video signal.

3. The video transmission device according to claim 1, wherein the video transceiving unit is further configured to:
configure the wireless communication unit into a Station mode when receiving the switching instruction to switch the video transmission device into the receiving mode, and
configure the wireless communication unit into an access point, AP, mode when receiving the switching instruction to switch the video transmission device to the sending mode.

4. The video transmission device according to any one of claims 1-3, wherein the video transmission device comprises a human-computer interaction component, and the switching instruction is triggered by the human-computer interaction component.

5. The video transmission device according to any one of claims 1-4, wherein the video transceiving unit is further configured to connect with a wired video source, and the second video source signal comprises a wired video source signal received from the wired video source.

6. The video transmission device according to any one of claims 1-5, wherein the video transceiving unit is further configured to generate an on-screen display, OSD, signal, and the to-be-displayed video signal comprises a signal obtained by superimposing the first video source signal and the OSD signal, or a signal obtained by superimposing the second video source signal and the OSD signal.

7. The video transmission device according to any one of claims 1-6, wherein the video transceiving unit is further configured to output the first video source signal or the second video source signal to a wired video receiving device.

8. The video transmission device according to any one of claims 1-7, wherein the video transceiving unit comprises a main control chip and a video transmission chip connected with each other,
the main control chip is configured to:
when receiving the switching instruction to switch the video transmission device into the receiving mode, configure the wireless communication unit into a Station mode, and enable the decoding mode on itself to decode the first video source signal and send the decoded first video source signal to the video transmission chip, and
when receiving the switching instruction to switch the video transmission device into the sending mode, configure the wireless communication unit into an access point, AP, mode, and enable the encoding mode on itself to encode the second video source signal into the to-be-sent video signal, send the to-be-sent video signal to the wireless communication unit, and send the second video source signal to the video transmission chip; and
the video transmission chip comprises:
a first video input interface for receiving a first wired video source signal from a first wired video source,
a second video input interface for receiving the first video source signal and the second video source signal from the main control chip,
a first video output interface for sending the first wired video source signal to the main control chip, so that the main control chip generates the second video source signal based on the first wired video source, and
a second video output interface for transmitting the first video source signal and the second video source signal to the display unit.

9. The video transmission device according to claim 8, wherein
the video transmission chip further comprises a third video input interface,
the video transceiving unit further comprises a video format conversion unit being configured to receive a second wired video source signal from a second wired video source, convert the second wired video source signal into a format supported by the third video input interface and send the format-converted wired video source signal to the video transmission chip through the third video input interface, and
the video transmission chip is further configured to send the second wired video source signal to the main control chip through the first video output interface, so that the main control chip generates the second video source signal based on the second wired video source.

10. The video transmission device according to claim 8 or 9, wherein the video transmission chip further comprises a third video output interface for outputting the first video source signal or the second video source signal to a wired video receiving device.

11. The video transmission device according to claim 10, wherein
the first video input interface, the second video input interface, the third video input interface are high definition multimedia interfaces, HDMIs,
the first video output interface, the second video output interface, the third video output interface are HDMIs,
the video transmission chip is equipped with a gating matrix for configuring a video output interface corresponding to each video input interface.

12. The video transmission device according to claim 10, wherein
the first video input interface, the second video input interface, the third video input interface are high definition multimedia interfaces, HDMIs,
the first video output interface, the second video output interface, the third video output interface are HDMIs,
the first wired video source is an HDMI wired video source,
the second wired video source is a serial digital interface, SDI, wired video source, and
the format conversion unit is configured to convert the second wired video source signal into a signal in HDMI format.

13. The video transmission device according to any one of claims 8-12, wherein
the video transceiving unit further comprises a video processing chip,
the main control chip is further configured to generate an on-screen display, OSD, signal and send the OSD signal to the video processing chip;
the video transmission chip is configured to transmit the first video source signal or the second video source signal to the video processing chip through the second video output interface, and
the video processing chip is configured to generate a to-be-displayed video signal by superimposing the first video source signal or the second video source signal with the OSD signal, and sending the to-be-displayed video signal to the display unit.

14. The video transmission device according to claim 13, wherein the main control chip comprises:
at least one video input interface, configured to connect with the first video output interface of the video transmission chip or an output interface of the wireless communication unit;
at least one OSD signal interface, configured to connect with an input interface of the video processing chip; and
at least one video output interface, configured to connect with the second video input interface of the video transmission chip or an input interface of the wireless communication unit.

15. The video transmission device according to any one of claims 8-14, wherein the first video source signal or the second video source signal is a signal preprocessed by the main control chip for implementing any one of following functions on the display unit: mask marking, picture zooming, local scaling, picture moving, picture freezing, vertical left-right flipping, and 3×3 grid.

16. The video transmission device according to any one of claims 1-15, wherein
the video transmission device further comprises a microcontroller,
the microcontroller is configured to perform at least one of: initializing a configuration of the video transceiving unit; or enabling a power button function of the video transmission device, and
the video transceiving unit is further configured to control the power button function to be in a disable state after receiving the switching instruction.
